# DEMANDE DE BREVET EUROPEEN

(11) **EP 0 757 889 A1**
(43) Date de publication de la demande: **12.02.1997**
(21) Numéro de dépôt: 96490031.0
(22) Date de dépôt: 31.07.1996
(51) Int. Cl.: A01K 83/06, A01K 97/04

(54) **Monture pour la pêche de poissons carnassiers au moyen d'un appât mort, kit de pêche et son procédé de mise en oeuvre**

(30) Priorité: 07.08.1995 FR 9509746
(71) Demandeur: S.P.L.S. Société Promotion Loisirs Sportifs (SA), 59800 Lille (FR)
(72) Inventeur: Kaleta, Jean-Pierre, 59800 Lille (FR)
(74) Mandataire: Matkowska, Franck

(57) **Abrégé**

La monture pour la pêche de poissons carnassiers au moyen d'un appât mort et plus particulièrement d'un poisson mort ou d'un ver, comprend un corps qui est destiné à être introduit à l'intérieur de l'appât. Ledit corps de la monture consiste en un corps plein (1) de forme allongée, qui présente une densité inférieure à 1 et suffisamment faible pour faire flotter l'appât après y avoir été introduit.

Le corps (1) pourra être réalisé dans un matériau léger du type liège, balsa, mousse comprimée, plastique. Ce corps pourra également renfermer un gaz ou un liquide présentant une densité inférieure à 1, ou pourra consister en une capsule sous vide.

## Description

La présente invention concerne la pêche de poissons carnassiers, aussi bien en eau de mer qu'en eau douce (sandres, brochets, perches...), au moyen d'un appât mort tel qu'un poisson, un ver, un poulpe de petite taille, un calamar,... Elle a plus particulièrement pour objets une monture que l'on introduit dans ce type d'appât pour le fixer sur une ligne de pêche, ainsi qu'un kit de pêche et un procédé de mise en oeuvre de ce kit, pour fixer un appât sur une monture de l'invention.

Les appâts précités auxquels s'applique l'invention sont des appâts que l'on peut qualifier de subaquatiques car ils sont utilisés pour attirer les poissons carnivores sous la surface de l'eau, par opposition aux appâts de type insectes (sauterelle, mouches,...) qui sont utilisés pour pêcher à la surface de l'eau et attirer le poisson hors de l'eau. Pour pêcher des poissons carnassiers avec de tels appâts subaquatiques, on a jusqu'à présent toujours cherché à entraîner ce type d'appât plus ou moins rapidement vers le fond de l'eau. Il est notamment connu de piquer ce type d'appât directement sur un hameçon fixé à l'extrémité du fil de la canne à pêche, et d'alourdir le fil de pêche au moyen d'un ou plusieurs plombs intermédiaires afin de faire couler plus rapidement l'appât vers le fond de l'eau. Dans ce cas, pour pêcher à une profondeur de pêche prédéterminée par rapport à la surface de l'eau, on fixe un bouchon flotteur sur le fil de pêche à distance voulue de l'appât.

Il est également connu de fixer un poisson mort sur le fil d'une ligne de pêche au moyen d'une monture qui comprend un corps que l'on enfile dans la gueule du poisson mort, et qui est fixé à l'extrémité du fil de la canne à pêche. Le plus souvent, selon une première variante de réalisation, cette monture comprend en guise de corps une tige métallique, et est équipée d'une part de plusieurs hameçons, que l'on accroche sur les flancs du poisson mort, et d'un fil que l'on enroule autour du corps du poisson mort, une fois la tige métallique introduite. Selon une deuxième variante de réalisation décrite dans la demande de brevet français FR 2 684 844, ce corps a la forme d'un cylindre creux, et est réalisé dans un matériau souple du type caoutchouc, le but visé étant de conférer une certaine souplesse au poisson mort. Ce cylindre creux est en outre muni d'ergots souples qui se rabattent à la périphérie du cylindre lors de son introduction dans le poisson, et qui s'ouvrent une fois le cylindre introduit en sorte de faire obstacle à son retrait.

Dans les deux variantes précitées, de par la conception même du corps de la monture, le poisson mort se trouve entraîné vers le fond de l'eau. De plus, ce type de monture comprend toujours un plomb qui est fixé au niveau de la tête du corps que l'on introduit dans le poisson, c'est-à-dire au niveau de la gueule du poisson mort, et qui est suffisamment lourd pour faire couler le plus rapidement possible le poisson mort et le maintenir dans le fond de l'eau, le poids de ce plomb étant adapté à la taille du poisson mort.

Le brevet US 5,355,614 décrit une troisième variante de réalisation dans laquelle le corps de la monture que l'on introduit à l'intérieur du poisson fait office de dispositif de plombée, et remplace les plombs qui sont habituellement fixés sur le fil de pêche. Selon l'enseignement de ce brevet, on évite ainsi tout risque d'emmêlement de la ligne lors de la mise à l'eau de l'appât. Conformément à l'enseignement de ce brevet, l'appât dans lequel est introduit le corps plein peut être maintenu à une certaine profondeur de pêche, qui dépend du poids du corps de la monture, du courant dans l'eau et de la vitesse de déplacement de l'appât dans l'eau. On comprend en effet que plus la vitesse communiquée à l'appât dans l'eau est importante, et plus l'appât aura tendance à remonter vers la surface de l'eau. Ce déplacement de l'appât dans l'eau peut être obtenu soit par un déplacement à une vitesse donnée de l'embarcation sur laquelle se trouve le pêcheur, il s'agit alors de la technique dite de pêche à la traîne, soit lorsque le pêcheur est statique, par une traction manuelle sur la ligne de pêche. Bien entendu, il est possible de faire remonter l'appât dans lequel est introduit le corps de la monture jusqu'à proximité de la surface de l'eau, en communiquant à l'appât une vitesse de déplacement suffisante qui dépend notamment du poids du corps de la monture. Il n'en reste pas moins que le corps de la monture du brevet US.5,355,614 présente toujours une densité supérieure à 1 et entraîne nécessairement l'appât vers le fond de l'eau, lorsque l'on ne lui communique pas une vitesse suffisante.

Comparativement à l'état connu de la technique précité, l'invention a pour objet une monture de pêche pour un appât mort du type poisson ou ver, qui de manière connue, notamment par le brevet US.5,355,614 comporte un corps plein de forme allongée qui est destiné à être introduit à l'intérieur de l'appât.

De manière caractéristique selon l'invention, ce corps plein présente une densité inférieure à 1 et suffisamment faible pour que l'appât puisse flotter une fois que le corps de la monture y a été introduit.

Comparativement à une monture classique qui alourdit l'appât mort, en essayant la monture de pêche de l'invention avec différents types d'appâts, le demandeur a pu constater que de façon tout-à-fait inattendue le nombre de prises augmentait de manière très significative. On peut expliquer cet accroissement du nombre de prises par le fait qu'en conférant une flottabilité à l'appât mort, celui-ci prend dans l'eau des mouvements qui le font ressembler à un appât vivant, ce qui améliore l'efficacité du leurre, sachant par ailleurs que le corps de la monture étant introduit à l'intérieur de l'appât, il n'est pas facilement décelable. La monture de l'invention présente l'avantage supplémentaire d'éviter tout risque que l'appât ne s'accroche dans le fond de l'eau, surtout lorsque ce fond est encombré. Enfin, il devient avantageusement possible de pêcher en statique avec un appât mort de type poisson ou ver à une hauteur de pêche prédéterminée par rapport au fond de l'eau, en équipant simplement le fil de pêche à l'extrémité duquel est fixé le corps de la monture avec un plomb intermédiaire. Contrairement à la monture du brevet US.5,355,614, la profondeur à laquelle se trouve l'appât mort dans l'eau ne dépend plus des vitesses du courant et du déplacement de l'appât, ce qui simplifie la pêche. Tous ces avantages de la monture de l'invention rendent la pêche aux poissons carnassiers plus attrayante et facilement accessible à un plus grand nombre de pêcheurs, et notamment à des pêcheurs débutants.

C'est le mérite de l'invention d'obtenir les avantages précités en proposant une solution qui va à l'encontre du principe même de pêche au moyen d'un appât mort du type poisson ou ver qui paraissait jusqu'à ce jour primordial. Certes on connaissait déjà par la demande de brevet français FR 2 509 133 une monture pour la pêche au vif consistant en un anneau élastique en matériau léger venant s'enfiler sur le corps du poisson vivant servant d'appât. Cependant, la fonction principale de cet anneau est de permettre de fixer l'hameçon de la ligne de pêche sur le poisson vivant, sans blesser ce poisson, et accessoirement d'empêcher que le poisson vivant n'aille de sa propre initiative dans le fond de l'eau. Ainsi, non seulement cet anneau est nécessairement un corps que l'on vient positionner à l'extérieur du corps de l'appât en sorte de ne pas le tuer, mais surtout le poisson servant d'appât étant vivant, il ne coule pas dans le fond de l'eau en se remplissant d'eau, contrairement à un poisson mort, mais est déjà capable par lui-même de remonter de sa propre initiative vers la surface de l'eau. L'anneau de la demande de brevet français FR 2 509 133 n'a donc pas pour fonction de rendre l'appât flottant.

De préférence, le volume du corps plein de la monture sera choisi légèrement supérieur au volume intérieur de l'appât mort avant introduction du corps, de telle sorte que l'introduction du corps de la monture à l'intérieur de l'appât se traduit par une augmentation de volume de ce dernier. Il en résulte un accroissement du volume d'eau déplacé par l'appât mort, et par là-même une augmentation de la poussée d'Archimède subie par l'appât mort.

Dans un premier mode de réalisation la monture sera exempte de tout moyen de plombée ; dans ce cas, la pêche se fera à la surface de l'eau.

Dans un second mode de réalisation, on cherche non pas à faire flotter l'appât mort à la surface de l'eau, mais à le faire flotter entre deux eaux, à une distance prédéterminée du fond de l'eau, qui sera dans la suite du présent texte encore appelée hauteur de pêche. A cet effet, sur le fil de pêche qui est relié au corps de la monture est monté un dispositif de plombée,ayant pour fonction de maintenir l'appât mort à une distance du fond, qui est déterminée par la longueur du fil de pêche séparant le corps de la monture et le dispositif de plombée.

Le dispositif de plombée peut être fixé sur le fil de pêche. Dans ce cas la hauteur de pêche ne peut varier. Avantageusement, le fil de pêche sera coulissant par rapport au dispositif de plombée. Dans ce cas en tirant plus ou moins sur le fil de pêche on régle la hauteur de pêche à une valeur quelconque.

Dans une première variante de réalisation d'une monture de l'invention avec un fil de pêche pouvant coulisser par rapport au dispositif plombée, un moyen de blocage faisant office de butée d'arrêt sera fixé sur le fil de pêche entre le dispositif de plombée et le corps de la monture, de telle sorte que la monture est réglée avec une hauteur de pêche minimale. Lorsque l'on tire sur le fil de pêche on rapproche le moyen de blocage du dispositif de plombée qui repose dans le fond de l'eau. Lorsque le moyen de blocage vient en butée contre le dispositif de plombée, le fil de pêche ne peut plus coulisser. L'appât mort se trouve ainsi bloqué en position à une hauteur de pêche minimale, qui correspond à la longueur de fil de pêche entre le moyen de blocage et le corps de la monture.

De manière similaire, dans une seconde variante de réalisation un moyen de blocage faisant office de butée d'arrêt sera fixé sur le fil de pêche entre le dispositif de plombée et l'extrémité de la ligne de pêche opposée au corps de la monture, de telle sorte que la monture est réglée avec une hauteur de pêche maximale, qui correspondant à la longueur de fil de pêche entre ledit moyen de blocage et le corps de la monture.

Les deux variantes précitées pourront avantageusement être combinées en sorte de concevoir une monture de pêche permettant un réglage de la hauteur de pêche par coulissement du fil de pêche par rapport au dispositif de plombée à une valeur quelconque comprise entre une valeur minimale et une valeur maximale déterminées.

Lorsque l'appât mort utilisé est un poisson, il est relativement aisé d'introduire le corps de la monture à l'intérieur de l'appât, en l'enfonçant manuellement dans la gueule du poisson. En revanche s'agissant d'un appât tel qu'un ver, l'opération d'introduction s'avère beaucoup plus délicate, si l'on veut éviter de détériorer l'appât. La présente invention a donc également pour objets un kit de pêche et un procédé de mise en oeuvre de ce kit pour faciliter l'introduction d'un corps de monture à l'intérieur d'un appât mort tel qu'un ver.

Selon l'invention, le kit de pêche comprend, outre une monture de pêche, une aiguille qui présente une portion médiane, se prolongeant à une première extrémité par un crochet. Le corps de la monture est équipé à l'une des ses extrémités d'une boucle prévue pour coopérer avec le crochet de l'aiguille.

La mise en oeuvre du kit de pêche de l'invention est réalisée selon la succession d'étapes suivantes :
- on introduit l'aiguille à l'intérieur de l'appât par son extrémité en forme de crochet ;
- on poursuit l'introduction de l'aiguille jusqu'à ce que toute la portion médiane de l'aiguille se trouve à l'intérieur de l'appât, et on fait ressortir le crochet de l'aiguille à l'extérieur de l'appât ;
- on relie le corps de la monture à l'aiguille, en passant la boucle dans le crochet de l'aiguille,
- et on remplace la portion médiane de l'aiguille par le corps de la monture, en tirant sur l'aiguille pour la faire ressortir de l'appât dans le sens opposé au sens d'introduction.

Il convient de noter que le kit de pêche de l'invention peut être avantageusement utilisé pour faciliter l'introduction dans un appât de tout type de corps de monture, indépendamment de la caractéristique de flottabilité de ce corps.

D'autres caractéristiques et avantages de l'invention apparaîtront plus clairement à la lecture de la description qui va à présent être faite de plusieurs modes particuliers de réalisation d'une monture de pêche selon l'invention pour poisson mort, ainsi que d'un kit de pêche pour appâts de type vers, laquelle description est donnée à titre d'exemple non limitatif et en référence au dessin annexé sur lequel :
- La figure 1 représente un exemple particulier de réalisation d'une monture de pêche selon l'invention, destinée à être utilisée avec un poisson mort en guise d'appât.
- La figure 2 représente une variante de réalisation de l'invention permettant une hauteur de pêche réglable entre une hauteur minimale et une hauteur maximale prédéterminées,
- La figure 3 illustre schématiquement la mise en oeuvre de la monture de la figure 2 dans un cours d'eau dont le fond est encombré,
- La figure 4 représente une variante de réalisation de la monture de l'invention permettant une hauteur de pêche minimale et utilisée pour la pêche à grande distance,
- la figure 5 illustre schématiquement la mise en oeuvre, pour la pêche au brochet, d'une monture similaire à celle de la figure 2, mais avec un unique moyen de blocage positionné entre le dispositif de plombée et le corps de la monture,
- la figure 6 illustre un kit de pêche pour appât de type ver,
- et les figures 7A, 7B, 7C et 7D illustrent les principales étapes pour réaliser l'introduction dans un ver du corps de monture du kit de la figure 6.

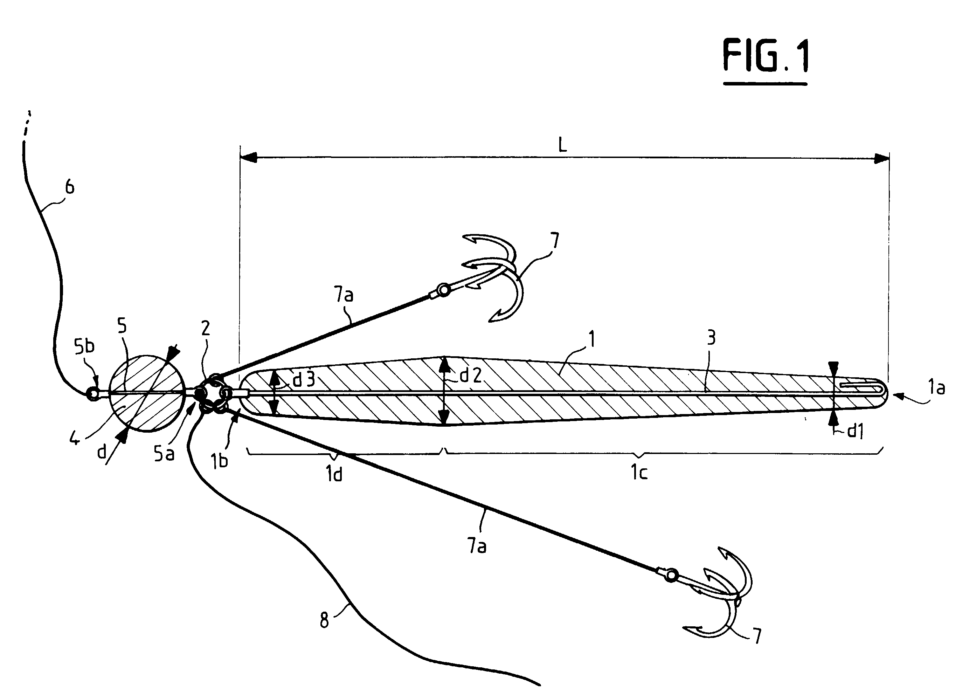

La monture particulière de la figure 1 permet de fixer un poisson mort, tel qu'un gardon, à l'extrémité d'un fil de pêche 6, le poisson mort servant d'appât pour la pêche d'un poisson carnassier tel qu'un brochet, perche...Cette monture comporte un corps plein 1 de longueur L , qui est destiné à être introduit dans la gueule du poisson mort servant d'appât, et qui présente une densité suffisamment faible pour faire flotter l'appât à la surface de l'eau.

Le corps 1 sera par exemple un corps compact , réalisé dans un matériau de densité inférieure à 1 du type liège, mousse comprimée, balsa, ou plastique. Dans une autre variante, il pourra s'agir d'un corps creux renfermant un gaz ou un liquide de densité inférieure à 1. Il pourra également être constitué par une capsule sous vide.

Dans la variante de la figure 1, le corps 1 est destiné à être introduit dans la gueule de l'appât mort par son extrémité 1a de diamètre d₁. Depuis cette extrémité 1a le corps 1 forme sur environ 2/3 de sa longueur L un premier tronc de cône 1c dont le diamètre va en augmentant jusqu'à une valeur maximale d₂. Sur le tiers restant de sa longueur L , le corps 1 forme un second tronc de cône 1d dont le diamètre va en décroissant jusqu'à son extrémité 1b de diamètre d₃. Cette extrémité 1b correspond à ce que l'on appelle la tête du corps 1, et se situe au niveau de la gueule du poisson mort, une fois que le corps 1 a été introduit. L'invention n'est pas limitée à la géométrie particulière du corps de la figure 1 . Dans une autre variante ce corps pourrait avoir une forme sensiblement cylindrique.

Lorsque l'on place un appât tel qu'un poisson mort dans l'eau, celui-ci se remplit d'eau et se trouve de ce fait à plus ou moins court terme entraîné vers le fond . Certains poissons comportent une vessie natatoire, c'est-à-dire une poche située dans l'abdomen et remplie d'oxygène et d'azote lorsque le poisson est vivant. Ces poissons une fois morts ont tendance au départ à remonter vers la surface de l'eau du fait de la présence de gaz dans leur vessie natatoire. Cependant , dès que cette vessie s'est vidée de son gaz , ce type de poisson se trouve également entraîné vers le fond.

La fonction principale du corps 1 de la monture de la figure 1 est de remplir l'intérieur du poisson mort faisant office d'appât avec un corps qui fait obstacle à la pénétration de l'eau à l'intérieur du poisson mort et qui présente une masse volumique plus faible que celle de l'eau. Ce corps 1 a éventuellement pour fonction supplémentaire d'augmenter le volume du poisson mort, une fois qu'il a été introduit. Il revient à l'homme du métier d'adapter les dimensions L , d₁, d₂, d₃ à la taille de l'appât. Dans un exemple précis de réalisation, la monture de la figure 1 était destinée à être utilisée avec comme appâts des poissons morts du type gardon et était réalisée en balsa, liège ou plastique selon les dimensions résumées dans le tableau ci-après.

| MODELE | TAILLE DE L'APPAT (cm) | d1 (mm) | d2 (mm) | d3 (mm) | L (mm) |
|---|---|---|---|---|---|
| A | 9 - 11 | 3 | 6 | 4 | 60 |
| B | 11 - 13 | 3,5 | 7 | 5 | 70 |
| C | 13 - 15 | 4 | 8 | 6 | 80 |
| D | 15 - 17 | 4,5 | 9 | 7 | 90 |

L'introduction du corps 1 à l'intérieur du gardon mort permettait d'augmenter le volume du gardon d'environ 30%, et de faire flotter celui-ci à la surface de l'eau.

La monture de la figure 1 comprend d'autres accessoires qui vont à présent succinctement être décrits. Tout d'abord, au niveau de la tête 1b du corps 1 est fixé un anneau 2 , par l'intermédiaire d'une corde à piano 3, traversant de part en part le corps 1.

Sur l'anneau 2 sont fixés deux hameçons 7 , par l'intermédiaire de cordes à piano 7a. Ces hameçons 7 permettent d'attraper le poisson carnassier lorsque celui-ci happe l'appât. Ils seront piqués dans les flancs de l'appât. Afin d'éviter tout risque que le corps 1, une fois introduit dans l'appât mort, puisse ressortir, on fixe en outre sur l'anneau 2 un fil métallique 8, par exemple en cuivre, qui est destiné à être passé à travers et à être enroulé autour de la gueule de l'appât.

L'anneau 2 permet également de fixer au niveau de la tête 1b du corps 1 une boule 4 dont la densité est inférieure à 1. Cette boule 4 sera par exemple réalisée dans un matériau léger tel que du balsa ou du liège. Elle a pour fonction d'alerter le poisson carnassier, et sera de préférence d'une couleur vive afin d'attirer plus efficacement les poissons carnassiers. Cette boule 4 est montée sur une corde à piano 5, dont une extrémité 5a est fixée sur l'anneau 2, et dont l'autre extrémité 5b forme un anneau permettant de fixer le fil de pêche 6 qui est relié à la canne à pêche (non représentée). Cette boule 4 permet également d'améliorer la flottabilité de l'appât mort. Pour un type de matériau donné, le volume de la boule 4 sera choisi en sorte de compenser le poids des autres accessoires de la monture, à savoir notamment le poids des hameçons 7 et du fil métallique 8. Il est par en outre préférable que celle-ci présente un volume qui soit du même ordre de grandeur que la taille de la tête de l'appât. Dans l'exemple précis de réalisation précédemment indiqué le diamètre d de la boule 4 valait respectivement 11 mm, 13 mm, 15 mm, et 17 mm pour les modèles A, B, C, et D.

Dans sa variante de réalisation la plus simple, la monture de la figure 1 est fixée à la canne à pêche par l'intermédiaire du fil de pêche 6 sans aucun dispositif de plombée. Dans ce cas, lorsque l'on met à l'eau la monture avec l'appât mort, ce dernier se trouve entraîné jusqu'à la surface de l'eau. On réalise ainsi une pêche en surface , en agitant l'appât mort par l'intermédiaire du fil de pêche 6.

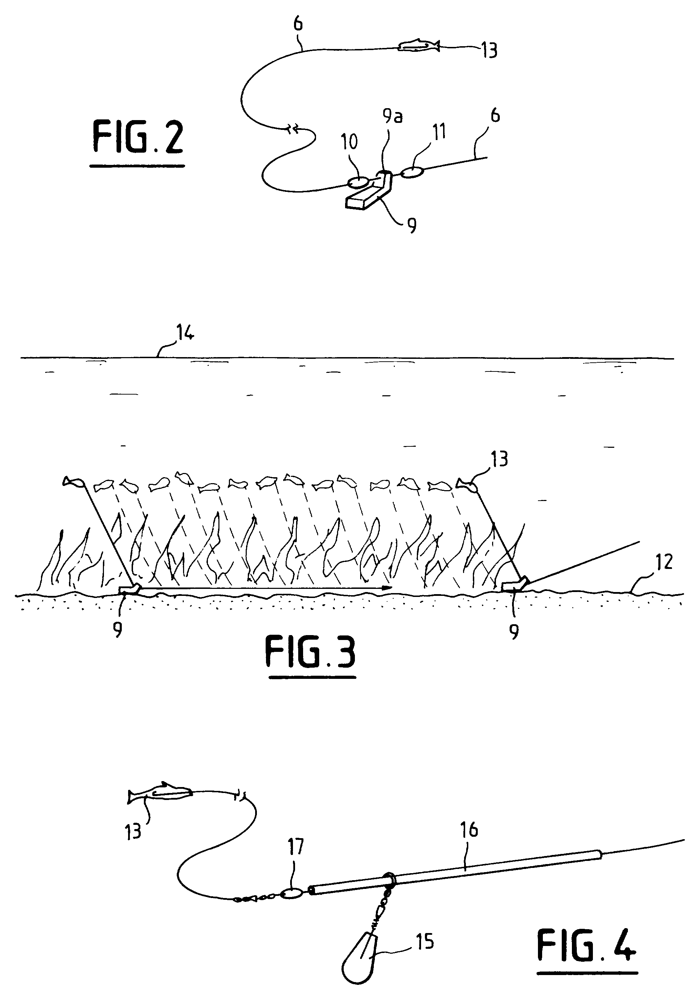

Si l'on se réfère à la figure 2, dans une autre variante de réalisation, on équipe la monture de pêche de l'invention avec un dispositif de plombée qui est en l'occurrence un plomb en forme de sabot 9. Sur cette figure, le corps 1 de la monture de la figure 1 est introduit dans un poisson mort référencé 13. Le plomb 9 comporte dans sa partie supérieure un orifice 9a permettant le passage du fil de pêche 6. Le diamètre de cet orifice est légèrement sur-dimensionné par rapport au diamètre du fil de pêche, de telle sorte que ce dernier peut coulisser par rapport au plomb 9. La mise en place du plomb 9 sur le fil de pêche 6 se fait préalablement à la fixation du corps 1 sur le fil de pêche 6.

Dans l'exemple de la figure 2, la monture comprend en outre deux moyens de blocage 10 et 11 en forme d'olive, encore appelés stop-fil , et fixés sur le fil de pêche 6 de part et d'autre du plomb 9. La dimension des moyens de blocage 10 et 11 est supérieure au diamètre de l'orifice 9a du plomb 9.

Si l'on se réfère à la figure 3, lorsque l'on met à l'eau la monture de la figure 2, le sabot 9 est entraîné par son poids vers le fond 12 de l'eau où il vient se poser. Il entraîne par la même occasion l'appât mort 13. En tirant plus ou moins sur le fil de pêche 6, il est ainsi possible de faire flotter l'appât mort 13 entre deux eaux, à une hauteur de pêche comprise entre une hauteur minimale et maximale déterminée par la position des moyens de blocage 10 et 11.

De par sa flottabilité, l'appât mort 13 se comporte avantageusement dans l'eau comme un appât vivant, ce qui améliore l'efficacité de l'appât. En outre lorsque l'appât utilisé est un poisson, on améliore encore l'efficacité de l'appât, en tirant sur le fil de pêche de la monture puis en le relâchant. Ceci peut s'expliquer par le fait que les proies préférées des poissons carnassiers sont des poissons agonisants, c'est-à-dire des poissons qui ont tendance à être entraînés vers la surface de l'eau, par leur vessie natatoire, et qui luttent pour retourner vers le fond de l'eau. En tirant puis en relâchant de manière répétitive le fil de pêche, compte-tenu de la flottabilité de l'appât, on parvient à simuler parfaitement le comportement précité d'un poisson agonisant dans l'eau.

Lorsque l'on tire suffisamment sur le fil de pêche 6 , le moyen de blocage 10 vient en butée contre le plomb 9. L'appât 13 flotte donc à une distance du fond 12 qui correspond à la hauteur minimale de pêche. Cette hauteur est déterminée par la longueur du fil de pêche 6 séparant le moyen de blocage 10 du corps 1 de la monture.

Inversement, lorsqu'on laisse filer le fil de pêche 6 , l'appât 13 remonte vers la surface de l'eau 14, jusqu'à ce que le second moyen de blocage 11 vienne en butée contre le sabot 9. Cette position correspond à la hauteur maximale de pêche, qui est donc déterminée par la longueur du fil de pêche 6 séparant le moyen de blocage 11 du corps 1 de la monture.

L'utilisation du moyen de blocage 10 pour régler une hauteur de pêche minimale présente principalement un intérêt lorsque l'on pêche dans des cours d'eau présentant des fonds très encombrés. En réglant judicieusement la hauteur de pêche minimale, on s'assure que l'appât mort reste toujours situé en eau claire.

Le réglage d'une hauteur de pêche maximale permet d'adapter la monture à la profondeur du cours d'eau dans laquelle on pêche, lorsque l'on souhaite maintenir l'appât constamment en dessous de la surface de l'eau.

Il est à noter , si l'on se réfère à la figure 3 , qu'il est également possible d'animer l'appât mort 13 lorsque celui-ci est positionné à la hauteur de pêche minimale. Il suffit pour cela de tirer de manière saccadée sur le plomb 9 de manière à le déplacer par rapport au fond 12.

On a représenté sur la figure 4 une autre variante de réalisation avec un plomb interchangeable 15, qui est fixé sur un tube 16 monté coulissant sur le fil de pêche 6. Un seul moyen de blocage 17 est prévu entre le plomb 15 et l'appât 13. Il est donc possible de faire remonter l'appât 13 jusqu'à la surface de l'eau. En revanche le moyen de blocage 17 permet, de la même manière que le moyen de blocage 10 de la monture de la figure 2 de régler une hauteur de pêche minimale. Ce type de montage de la figure 4 est particulièrement adapté pour la pêche à grande distance.

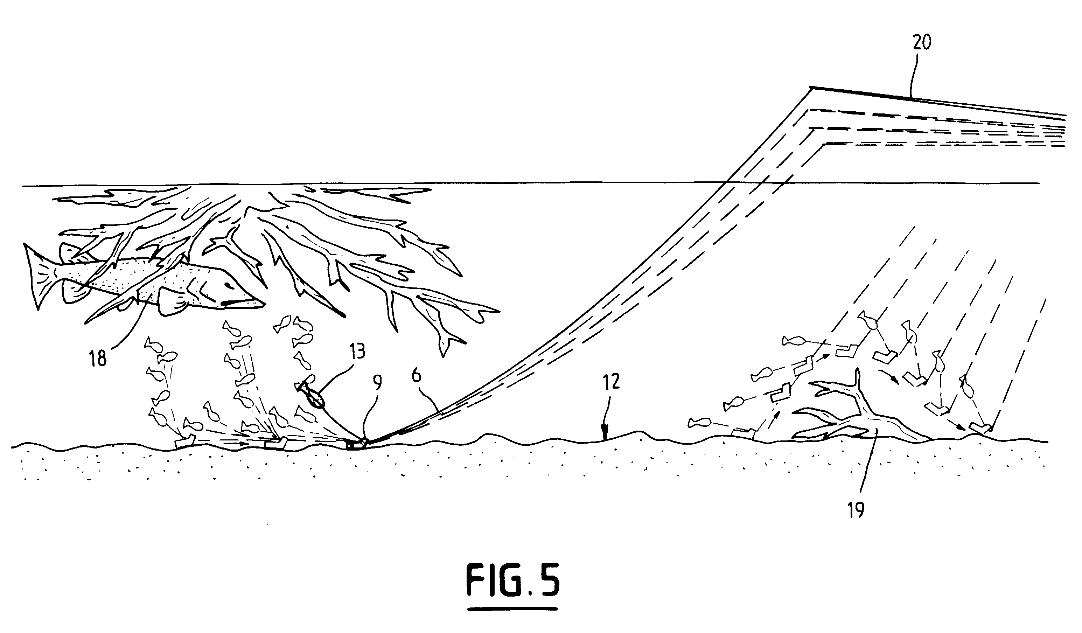

Pour réaliser la pêche en rivière de poissons carnassiers du type brochet, on utilisera avantageusement la monture de la figure 2 , sans le moyen de blocage 11. Ce type de pêche est illustré à la figure 5 . Dans une position donnée du plomb 9, en tirant plus ou moins sur le fil de pêche 6 on fait monter ou descendre l'appât mort 13, jusqu'à une hauteur minimale de pêche . Il est possible également de faire déplacer le plomb 9 par rapport au fond du cours d'eau, et de recommencer dans une autre position les mouvements de montée et descente de l'appât mort. Le brochet 18 ou tout autre type de poisson carnassier se trouve ainsi parfaitement leurré par l'appât mort 13 qu'il prend pour un poisson vivant. De plus, lorsque le plomb 9 rencontre un obstacle dans le fond du cours d'eau, tel que par exemple une souche d'arbre 19 , il est possible de faire passer le plomb 9 au-dessus de cet obstacle en tirant dans un premier temps à fond sur le fil de pêche pour amener l'appât mort à sa hauteur de pêche minimale, puis en soulevant le sabot plomb au moyen de la canne à pêche 20 jusqu'à le faire passer au-dessus de l'obstacle.

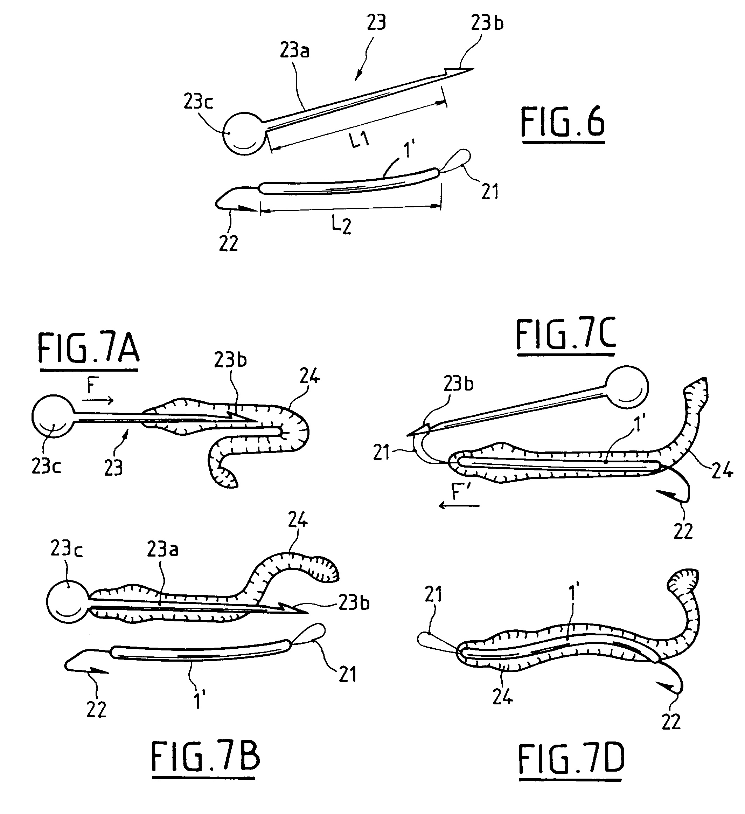

On a représenté à la figure 6 un kit de pêche permettant de fixer un appât tel qu'un ver sur un fil de pêche. Ce kit comporte un corps 1' qui est conçu pour être introduit à l'intérieur d'un ver, et une aiguille 23 pour l'introduction du corps 1' à l'intérieur du ver. De préférence, le corps 1' sera réalisé dans un matériau souple afin de s'adapter à la forme du ver. Dans l'exemple particulier illustré à la figure 6, le corps 1' est un corps longiligne cylindrique de longueur L₂. Sur l'une de ses extrémités est fixée par tout moyen approprié une boucle 21. Sur l'extrémité opposée du corps 1' est fixé un hameçon 22. L'aiguille 23 comporte une portion médiane 23 de longueur L₁ qui se prolonge à une première extrémité par un crochet 23b et à son extrémité opposée par une boule 23c dont le diamètre est nettement supérieur au diamètre moyen de la portion médiane 23a.

L'introduction du corps 1' à l'intérieur d'un ver 24 va à présente être détaillée en référence aux figures 7A à 7D. Si l'on se réfère à la figure 7A, dans une première étape on commence par introduire l'aiguille 23 à l'intérieur du ver 24 en enfonçant cette aiguille par l'intermédiaire de son crochet 23b. Sur cette figure le sens d'introduction de l'aiguille est représenté par la flèche F. On poursuit l'introduction de l'aiguille 23 jusqu'à ce que sa portion médiane 23a soit entièrement introduite dans le ver 4, et on fait ressortir l'extrémité 23b en forme de crochet de l'aiguille 23 à l'extérieur du ver 24. Tel que cela est illustré sur la figure 7B, la boule 23c vient en butée contre le ver 24 et empêche avantageusement l'aiguille de s'enfoncer plus avant. Ensuite, on vient placer la boucle 21 du corps 1' sur le crochet 23b de l'aiguille qui fait saillie à l'extérieur du ver, puis on tire sur l'aiguille 23 en la saisissant par l'intermédiaire de la boule 23c, en sorte de la faire ressortir de l'appât dans le sens opposé à son sens d'introduction, c'est-à-dire dans le sens de la flèche F'. En tirant de cette manière sur l'aiguille 23, on introduit par là-même le corps 1' de la monture à l'intérieur du ver 24 dans le logement qui a été percé par la partie médiane 23 de l'aiguille. Une fois ces opérations terminées, on retire la boucle 21 du crochet 23b de l'aiguille, le corps 1' de la monture étant introduit à l'intérieur du ver 24 tel que cela est illustré à la figure 7D. Si l'on se réfère à cette même figure, la boucle 21 fait saillie par rapport au ver 24 et peut ainsi avantageusement être utilisée pour fixer l'ensemble sur la ligne de pêche.

On comprend à la lumière de la description précitée du kit de pêche de l'invention, que la portion médiane 23a de l'aiguille 23 a pour fonction de réaliser un logement adapté aux dimensions du corps 1', afin de permettre l'introduction de ce corps 1' sans endommager le ver 24. Le diamètre de la portion médiane 23a de l'aiguille devra donc être adapté au diamètre du corps 1'. Par ailleurs, dans la variante de réalisation qui est illustrée les longueurs L₁ et L₂ sont avantageusement sensiblement égales, ce qui permet au corps 1' d'être totalement logé à l'intérieur du ver 1', l'hameçon 22 venant tout juste en butée contre le ver. Cet hameçon 22 dont la fonction principale est d'harponner le poisson carnassier qui se saisit de l'appât, a également pour fonction supplémentaire d'empêcher que le corps 1' ne ressorte trop facilement de l'appât.

Grâce au kit de pêche de la figure 6, il est possible d'introduire à l'intérieur d'un ver un corps longiligne de monture de pêche dans sa totalité, et ce sans détériorer le ver. Le ver peut ainsi être fixé de manière tout-à-fait fiable sur une ligne de pêche, en limitant les risques de décrochage du ver.

Dans un exemple précis de réalisation, le corps 1' était réalisé dans une mousse présentant une densité inférieure à 1 et permettait avantageusement de rendre le ver flottant. Bien entendu, il est également envisageable sans rien changer au procédé de mise en oeuvre du kit de pêche qui a été décrit et aux avantages qu'il procure, d'utiliser au lieu et place du corps l'en mousse, un corps l' présentant une densité supérieure à 1.

Le principe du kit de pêche qui vient d'être décrit pourra avantageusement être adapté pour être utilisé avec d'autres appâts tels que des calamars ou des poulpes de petite taille. La boule 23c de l'aiguille 23 pourra en outre être remplacée par tout moyen de butée présentant un encombrement suffisant pour empêcher l'aiguille de s'enfoncer plus avant dans l'appât. Enfin, il est envisageable, dans le cadre du kit de pêche de l'invention, de remplacer sur l'aiguille 23 le moyen de butée du type de la boule 3c, par un repère visuel délimitant la portion médiane 23a de l'aiguille. Dans ce cas, l'utilisateur contrôlera visuellement l'enfoncement de la portion médiane de l'aiguille à l'intérieur de l'appât. ll est également envisageable dans le cadre de l'invention de prévoir sur une même aiguille plusieurs repères visuels délimitant des portions médianes de différentes longueurs, l'aiguille pouvant ainsi être utilisée avec différentes tailles de corps de monture.

## Revendications

1. Monture pour la pêche de poissons carnassiers au moyen d'un appât mort tel qu'un poisson ou un ver, la monture comprenant un corps plein de forme allongée qui est destiné à être introduit à l'intérieur de l'appât, caractérisée en ce que ledit corps plein (1 ; 1') présente une densité inférieure à 1 et suffisamment faible pour faire flotter l'appât mort, après avoir été introduit à l'intérieur de l'appât.

2. Monture selon la revendication 1 caractérisée en ce que le volume du corps plein (1; 1') est légèrement supérieur au volume intérieur de l'appât mort avant introduction du corps, de telle sorte que l'introduction du corps de la monture à l'intérieur de l'appât se traduit par une augmentation de volume de ce dernier.

3. Monture selon la revendication 1 ou 2 caractérisée en ce que le corps (1,1') de la monture est un corps compact réalisé dans un matériau léger du type liège, balsa, mousse comprimée, plastique.

4. Monture selon l'une des revendications 1 ou 2 caractérisée en ce que le corps de la monture est un corps creux renfermant un gaz ou un liquide de densité inférieure à 1, ou consiste en une capsule sous vide.

5. Monture selon l'une des revendications 1 ou 2 caractérisée en ce qu'au niveau de la tête (1b) du corps (1) est fixée une boule (4) , de préférence de couleur vive, dont la densité est inférieure à 1.

6. Monture selon la revendication 1 ou 2 caractérisée en ce qu'elle comprend un fil de pêche (6) qui est relié au corps de la monture, et sur lequel est monté un dispositif de plombée, ayant pour fonction de maintenir l'appât mort (13) à une distance du fond (12), qui est déterminée par la longueur du fil de pêche séparant le corps (1) et le dispositif de plombée.

7. Monture selon la revendication 6 caractérisée en ce que le fil de pêche (6) peut coulisser par rapport au dispositif de plombée (9 ; 15).

8. Monture selon la revendication 7 caractérisée en ce qu'un moyen de blocage (10 ; 17) faisant office de butée d'arrêt est fixé sur le fil de pêche (6) entre le dispositif de plombée (9 ; 15) et le corps de la monture.

9. Monture selon la revendication 7 ou 8 caractérisée en ce qu'un moyen de blocage (11) faisant office de butée d'arrêt est fixé sur le fil de pêche (6) entre le dispositif de plombée (9) et l'extrémité du fil de pêche (6) opposée au corps de la monture.

10. Kit de pêche comprenant une aiguille (23), et une monture (1') visée à l'une quelconque des revendications 1 à 9, l'aiguille (23) présente une portion médiane (23a), qui se prolonge à une première extrémité par un crochet (23b), le corps (1') de la monture est équipé à l'une des ses extrémités d'une boucle (21) prévue pour coopérer avec le crochet (23b) de l'aiguille (23).

11. Kit de pêche selon la revendication 10 caractérisé en ce que la portion médiane (23a) de l'aiguille (23) présente une longueur (L₁ ) sensiblement égale à la longueur (L₂) du corps (1') de la monture.

12. Kit de pêche selon la revendication 10 ou 11 caractérisé en ce que l'aiguille comporte, au niveau de la seconde extrémité de la portion médiane 23(a), une partie (23c) qui est sur-dimensionnée par rapport à la portion médiane (23a) et qui a pour fonction de faire obstacle à la pénétration plus avant de l'aiguille dans l'appât.

13. Procédé pour la mise en oeuvre du kit de l'une quelconque des revendications 10 à 12 avec un appât (24), caractérisé en ce qu'il comprend la succession d'étapes suivantes :
- introduire l'aiguille (23) à l'intérieur de l'appât (24) par son extrémité en forme de crochet (23b),
- poursuivre l'introduction de l'aiguille (23) jusqu'à ce que toute la portion médiane (23a) de l'aiguille se trouve à l'intérieur de l'appât, et faire ressortir le crochet (23b) de l'aiguille à l'extérieur de l'appât,
- relier le corps (1') de la monture à l'aiguille (23), en passant la boucle (21) dans le crochet (23b) de l'aiguille,
- remplacer la portion médiane (23a) de l'aiguille par le corps (1') de la monture, en tirant sur l'aiguille (23) pour la faire ressortir de l'appât dans le sens opposé au sens d'introduction.
